# EUROPEAN PATENT APPLICATION

(11) **EP 4 796 198 A1**
(43) Date of publication of application: **26.08.2026**
(21) Application number: 26158733.1
(22) Date of filing: 16.02.2026
(51) Int. Cl.: B01D 29/33, B01D 36/02, C02F 1/28, C02F 1/44, B01D 35/30, B01D 61/08

(54) **ACTIVATED CARBON FILTER CARTRIDGE AND RELATED FILTRATION SYSTEM**

(30) Priority: 25.02.2025 IT 202500003687
(71) Applicant: Fil.Tech Srl, 42048 Rubiera (RE) (IT)
(72) Inventor: AMADUZZI, Roberto, 42048 Rubiera (RE) (IT)
(74) Representative: Rausa, Mario Alberto Manlio

(57) **Abstract**

An activated carbon filter cartridge (100) is described, comprising: a casing (105) provided with at least one inlet (115) and at least one outlet (120) for a liquid, and a partition septum (155) formed of activated carbon, which is inserted into an inner cavity (110) of the casing (105), dividing it into a first compartment (160), communicating with the inlet (115), and a second compartment (165), communicating with the outlet (120), wherein said casing (105) is adapted to be housed inside a vessel (505) to divide the inner volume into two separate chambers, of which a first chamber (550), communicating with an inlet port (510) of the vessel (505) and with the inlet (115) of the casing (105), and a second chamber (555), communicating with the outlet (120) of the casing and with an outlet port (515) of the vessel (505).

## Description

### Technical field

The present invention relates to an activated carbon filter cartridge intended, in particular but not necessarily, to be used as part of a reverse osmosis filtration system for the filtration of water for human use and/or technical use.

### Technical field

As is known, in reverse osmosis filtration systems, the water to be treated is fed into a pressure vessel wherein an osmotic membrane filter cartridge is housed.

The osmotic membrane is adapted to allow the selective passage of a part of water (permeate) but not of all the salts possibly dissolved therein, which are therefore concentrated in the reject water that remains upstream of the filter cartridge.

In particular, these filtration apparatuses exploit the principle of cross-flow filtration, since the reject water with the highest concentration of salts that remains upstream of the filter cartridge is continuously discharged from the pressure vessel, to prevent the salts and/or other pollutants from quickly clogging the osmotic membrane.

From the system engineering perspective, the pressure vessel in which the filter cartridge is housed is therefore generally provided with an inlet for the water to be filtered, with a first outlet for the filtered water (permeate), having a low concentration of salts, and with a second outlet for discharging the reject water having a high concentration of salts.

In order for this type of filtration systems not to discharge an excessive amount of reject water, it is generally necessary that the water to be filtered remains inside the pressure vessel for a relatively long time, i.e. that the flow rate of the reject water is relatively low. On the other hand, the longer the residence time of the water to be filtered inside the pressure vessel, the greater the possibility that salts and/or other pollutants are deposited on the osmotic membrane of the filter cartridge, causing it to clog.

For this reason, it is preferred that the flow rate of reject water that is discharged from the pressure vessel is rather significant, at the expense of the flow rate of filtered water (permeate).

In order to increase the overall flow rate of filtered water (permeate) obtainable from the filtration system, embodiments have therefore been proposed involving the use of a plurality of pressure vessels connected to each other in parallel or in series, each of which contains a respective osmotic membrane filter cartridge.

In the case of a parallel connection, the filtration system is able to treat a higher flow rate of incoming water, obtaining in a correspondingly higher flow rate of filtered water (permeate) at the outlet, but also a higher flow rate of reject water (concentrate).

In the case of a series connection, on the other hand, the reject water leaving a first pressure vessel is directly conveyed into a second pressure vessel, where it is again filtered by the corresponding osmotic membrane filter cartridge, and so on, obtaining an overall higher flow rate of filtered water (permeate) and also a lower flow rate of reject water.

In any case, as osmotic membranes are extremely sensitive to corpuscular impurities and certain chemical substances, such as for example chlorine, it is common practice to provide reverse osmosis filtration systems with an activated carbon filter, placed upstream of the osmotic membranes, which is designed to perform a water pre-filtration step to stop corpuscular impurities and remove chlorine and other substances potentially harmful to the membranes.

This active carbon filter generally comprises its own vessel, provided with an inlet and an outlet for the water to be treated, inside which an active carbon filter septum is placed that is adapted to be passed through by the water flowing from the inlet to the outlet. Activated carbon is a material mainly containing amorphous carbon that is treated, for example by chemical and/or thermal processes, so as to have a highly porous structure and high specific area (i.e., high surface area per unit volume).

Thanks to its high porosity, activated carbon exhibits a high adsorptive power in relation to many contaminants, whose molecules attach themselves to the surface of the activated carbon through physical or chemical interactions (for example Van der Waals forces or weak chemical bonds).

In some embodiments, the activated carbon filter vessel is fixed to the reverse osmosis filtration system and is of the openable type, to enable the filter septum to be periodically replaced.

However, activated carbon can sometimes cause irritation of the skin, eyes and respiratory tract, so it is advisable that the replacement of filter septa is carried out by skilled people, using appropriate protection (e.g. masks to avoid inhalation, gloves to avoid direct contact with the skin and protective goggles).

Consequently, especially but not exclusively in the domestic field, solutions have been proposed using single-use activated carbon filters, whose vessels are adapted to be replaced along with the activated carbon filter septa contained therein, making them much easier to handle and ensuring greater hygiene.

However, these solutions have the drawback that, in order to hydraulically connect the activated carbon filter with the reverse osmosis filtration system placed downstream, relatively long pipes and hydraulic devices, for example fittings and/or couplings, are used, which can become a source of contamination for the water being filtered.

In fact, being able to remove chlorine, i.e. the biocide normally contained in drinking water distributed by the public water network, activated carbon filters have the shortcoming of depriving water of the only means capable of stopping a possible bacterial load, therefore it would be preferable for the hydraulic path towards the osmotic membranes to be as short as possible and with as few junctions as possible.

Another drawback is that the hydraulic connection of these single-use activated carbon filters to the filtration system still requires in any case some expertise.

### Disclosure of the invention

An object of the present invention is to solve or at least mitigate the mentioned drawbacks of the prior art, within the context of a simple and rational and cost-effective solution.

This and other objects are reached thanks to the characteristics of the invention as set forth in the independent claims. The dependent claims outline preferred and/or particularly advantageous aspects of the invention but not strictly necessary for implementing it. In particular, one embodiment of the present invention makes available an activated carbon filter cartridge, comprising:
- a casing provided with at least one inlet and at least one outlet for a liquid (e.g. water), and
- a partition septum formed of activated carbon, which is inserted into an inner cavity of the casing, dividing it into a first compartment, communicating with the inlet, and a second compartment, communicating with the outlet,
wherein said casing is adapted to be housed within a vessel, in order to divide the inner volume into two separate chambers, of which a first chamber, communicating with an inlet port of the vessel and with the inlet of the casing, and a second chamber, communicating with the outlet of the casing and with an outlet port of the vessel.

Thanks to this solution, a filter cartridge is made available that can be advantageously removed and inserted from/into the corresponding vessel, to be replaced as is the case with current reusable activated carbon filters, thereby allowing a reduction in the path and number of hydraulic junctions required to connect the activated carbon filter to devices placed downstream, for example to the osmotic membranes of a reverse osmosis filtration system; but which, at the same time, does not expose the people carrying out the replacement to the activated carbon, since the activated carbon remains enclosed in the casing, thereby simplifying handling and ensuring greater hygiene, as is the case with current single-use solutions.

In practice, the filter cartridge set-forth above achieves the advantages of both known solutions without incurring the respective drawbacks.

The partition septum of the filter cartridge may comprise or consist of a solid block of activated carbon, i.e. a body provided with and adapted to maintain its own shape, which may for example be obtained by compaction and/or aggregation of activated carbon powder.

However, it is not excluded that, in other embodiments, the partition septum may consist of granules or incoherent powder of activated carbon enclosed in a container permeable to the fluid to be treated, which also determines the shape of the septum.

In any case, one embodiment of the invention provides that the partition septum may have a tubular shape.

Thus, it is advantageously possible to increase the filtering surface while maintaining a relatively small dimension.

According to an aspect of this embodiment, the inner cavity of the casing may have a cylindrical or conical shape, and the partition septum may be arranged therein, so that the longitudinal axes of the inner cavity and partition septum are mutually parallel or coincident.

Thanks to this solution it is advantageously possible to obtain a filter cartridge with a rather small dimension.

According to another aspect of this embodiment, the first compartment of the filter cartridge may be at least partially formed by a volume between the outer side surface of the partition septum and an inner surface of the casing, while the second compartment may be at least partially formed by a volume delimited by the inner surface of the partition septum.

Thus, the activated carbon partition septum is adapted to be passed through from the outside to the inside.

However, it is not excluded that, in other embodiments, the compartments may be inverted and, therefore, that the activated carbon partition septum is adapted to be passed through from the inside to the outside.

One embodiment of the invention provides that the filter cartridge may further comprise an O-Ring, which is applied externally around the casing, for example housed in an annular groove formed in the outer surface of the casing itself, and lies in a plane relative to which the inlet and outlet are positioned on opposite sides, said O-Ring being adapted to remain interposed between the casing and the vessel housing the filter cartridge.

Thus, it is advantageously possible to improve the partition between the inner chambers of the vessel.

Going more into detail, the casing of the filter cartridge may have a tubular wall adapted to laterally delimit the inner cavity, a first closing element adapted to close a first end of the tubular wall, and a second closing element adapted to close a second end of the tubular wall.

The O-Ring may be applied externally and coaxially around the tubular wall of the casing, lying in a plane orthogonal to a longitudinal axis of the tubular wall itself.

Preferably, the O-Ring may be placed, along the direction of the longitudinal axis of the tubular wall, in a position proximal to the first end of the side wall itself.

The inlet of the filter cartridge may be at least partially defined by a gap defined between the first end of the tubular wall and the first closing element.

The outlet of the filter cartridge may be at least partially formed in the second closing element, for example defined by a cylindrical tang having an axis parallel to or coincident with the longitudinal axis of the tubular wall of the casing.

From a constructional perspective, the first closing element may be made in a body separated from the tubular wall.

Thus, when the filter cartridge is exhausted, the first closing element may be removed, allowing for the removal of the active carbon filter septum and thus a differentiated disposal of the components.

For example, the first closing element may be fixed to the tubular wall by means of a plurality of pins individually projecting from the first end of the tubular wall itself and extending parallel to the longitudinal axis of the latter, each of which is inserted through a corresponding through-hole of the first closing element and carries, on the opposite side relative to the side wall, an enlarged head for axial retention, which is made in one piece with the corresponding pin.

For example, the enlarged head may be obtained by plastic deformation of the free end of the corresponding pin, performed after the latter has been inserted into the respective through-hole.

This fixing solution prevents the parts from being easily separated by end-users, ensuring the principle of a single-use filter cartridge, but it can be detached without excessive efforts by the people in charge of disposal.

Otherwise, the second closing element may be made in a single piece with the tubular wall.

Thus, the second closing element and the tubular wall globally define a single, substantially glass-shaped body, simplifying the steps for assembling the filter cartridge. According to another embodiment of the invention, the filter cartridge may comprise a shutter body, which is adapted to obstruct an outlet port of the vessel in which the filter cartridge is adapted to be received.

This aspect of the invention is particularly useful in order to be able to place the filter cartridge inside a vessel originally intended for other purposes, for example inside a vessel originally intended to house an osmotic membrane filter cartridge of a reverse osmosis filtration system.

In fact, this vessel generally has one inlet port and two outlet ports, of which a first outlet port for the concentrate and a second outlet port for the permeate.

By occluding one of these outlet ports, preferably the permeate one, with the shutter body, the filter cartridge may advantageously perform its function while being placed in one of the vessels originally designed for osmotic membranes.

Thus, it is possible to create activated carbon pre-filters for reverse osmosis filtration systems using the same vessels that are used for osmotic membranes, with no need for additional dedicated vessels, but simply by connecting in series at least two of these vessels, of which a first vessel will house the activated carbon filter cartridge and a second vessel will house an osmotic membrane.

Or it is possible to easily convert already existing reverse osmosis filtration systems, as long as they are provided with at least two osmotic membrane vessels placed in series, by removing the existing pre-filter (if present) and mounting the activated carbon filter cartridge in the first vessel of the series.

A further embodiment of the invention provides that the filter cartridge may comprise a sanitising capsule provided with:
- a shell defining therein a mixing chamber and provided with at least one inlet opening in communication with the outlet of the casing and at least one outlet opening, and
- at least one solid tablet of sanitising substance, for example of a biocide substance, which is contained inside the mixing chamber.

This sanitising capsule combined with the activated carbon filter cartridge has the advantage that, after each replacement of the filter cartridge, the hydraulic system downstream of it, for example the reverse osmosis filtration system, can immediately and automatically undergo a preliminary sanitisation process.

Normally, the replacement of the activated carbon filter cartridge, as well as many other maintenance activities of the hydraulic system in which it is installed, does not take place under aseptic conditions and may therefore be the cause of bacterial contamination. Thanks to the proposed solution, immediately after the filter cartridge has been replaced, the water will be forced to pass through the mixing chamber of the sanitising capsule, coming into contact with the sanitising substance tablet which, as it gradually dissolves, releases the sanitising substance into the water, which is thus put into circulation within the hydraulic system, performing the sanitisation process.

When the tablet of sanitising substance is completely dissolved, the activated carbon filter cartridge and the downstream system can be used normally, with no need for any further intervention.

According to another embodiment of the invention, the filter cartridge may comprise a hollow tube, which is in communication with the outlet and is provided with one or more outflow openings for the liquid.

For example, the hollow tube may comprise a tubular-shaped side wall having a first end in communication with the outlet of the filter cartridge casing, and a second opposite end closed by a bottom wall, each outflow opening being made in said tubular side wall.

In order to keep the filter cartridge compact, this hollow tube may comprise (e.g. constitute and/or define and/or integrate and/or make available) the aforementioned shutter body.

Still aiming at reducing the dimensions of the filter cartridge, the hollow tube may also contain at least partially the aforementioned sanitising capsule, so that the outlet opening of the shell of the sanitising capsule is in communication with the outflow opening of the hollow tube.

Another aspect of this embodiment provides that the hollow tube may be made in a body separated from the casing of the filter cartridge.

This is useful for example, but not exclusively, to enable the sanitisation capsule to be mounted.

The hollow tube may then be fixed to the casing of the filter cartridge by means of coupling means adapted to counteract detachment between the hollow tube and the casing itself. The use of coupling means has the advantage of making the assembly of the hollow tube particularly simple and quick.

In particular, an aspect of this embodiment provides that the coupling means may comprise first coupling means adapted to counteract the movement of the hollow tube and the casing away from each other, beyond a predetermined first constraining position, and second coupling means adapted to counteract the movement of the hollow tube and the casing away from each other, beyond a predetermined second constraining position,
wherein the hollow tube and the casing in said second constraining position are closer to each other than in said first constraining position,
and wherein said second constraining means are configured to offer a greater contrast relative to said first constraining means.

Thanks to this solution, as long as the hollow tube is fixed to the casing by the first coupling means, it can be removed relatively easily, for example to insert the sanitising capsule.

When, on the other hand, the hollow tube is fixed to the casing by the second coupling means, fixing (though preferably of the detachable type) may be strong enough to ensure that the hollow tube remains integral with the casing containing the activated carbon, for example during the steps for removing the exhausted filter cartridge.

In addition to the filter cartridge as such, the present invention also makes available a filtration system comprising:
- at least one first vessel provided with at least one inlet port and at least one first outlet port for a liquid, for example water,
- a filter cartridge as outlined above, which is housed in the first vessel so as to divide the inner volume of the first vessel into a first chamber, in communication with the inlet port of the first vessel and with the inlet of the filter cartridge, and a second chamber, in communication with the outlet of the filter cartridge and with said first outlet port of the first vessel.

In particular, said first vessel may have/comprise a tubular side wall and a bottom part that closes a first axial end of said side wall.

The side wall and bottom part of the first vessel may be made in a single-piece body.

The first vessel may further comprise a removable lid adapted to close a second opposite axial end of the side wall.

The inlet port and first outlet port may be formed in the side wall of the first vessel.

The first vessel may be provided with a second outlet port, formed for example in the bottom part, and the filter cartridge may comprise the aforementioned shutter body adapted to obstruct said second outlet port of the first vessel.

For example, as explained above, the first vessel could be a vessel originally designed to house an osmotic membrane filter cartridge.

The filtration system may then further comprise:
- at least a second vessel provided with at least one inlet port, a first outlet port and a second outlet port for a liquid, for example water, and
- an osmotic membrane filter cartridge, which is inserted inside the second vessel to divide its inner volume into three distinct chambers, of which a first chamber communicating with the inlet port, a second chamber communicating with the first outlet port and a third chamber communicating with the second outlet port,
wherein the inlet port of said second vessel is connected to the first outlet port of the first vessel.

A reverse osmosis filtration system is thus obtained that is extremely compact, as it does not require an external activated carbon pre-filter, which makes it particularly advantageous especially, but not exclusively, in the domestic field.

A further important advantage of this solution is that it minimises the distance between activated carbon and membrane, which allows for a shorter section with possible bacterial development.

Similarly to the first vessel, the second vessel may also comprise a tubular side wall and a bottom part closing a first axial end of said side wall, the inlet port and the first outlet port being formed in the side wall and the second outlet port being formed in the bottom part.

Preferably, said first and second vessels may be arranged so that their respective side walls are arranged side by side and have mutually parallel central axes.

The side walls and bottom parts of the first and second vessels may also be made in a single-piece body, which may also define a transfer duct adapted to connect the first outlet port of the first vessel with the inlet port of the second vessel.

Thanks to this single-piece body, it is advantageously possible to create a reverse osmosis filtration system provided with two vessels that are already hydraulically connected in series, with no need for flexible hoses and/or fittings, increasing compactness and simplicity, and consequently reducing potential break points, potential bacterial contamination points, potential stagnation points and pressure drops, to the benefit of productivity and ease of maintenance.

According to an aspect of this embodiment, the filtration system may also comprise a collection manifold, possibly defined at least partially by the same single-piece body, communicating with both the first outlet port of the first vessel and with the first outlet port of the second vessel.

Thanks to this solution, the collection manifold is adapted to receive the permeate flowing out of the second vessel, further reducing the number of fittings and hydraulic connections required to implement the reverse osmosis filtration system.

### Brief description of the drawings

Further features and advantages of the invention will be more apparent after reading the following description provided by way of a non-limiting example, with the aid of the accompanying drawings.
Figure 1 is a section view of a reverse osmosis filtration system according to an embodiment of the present invention.

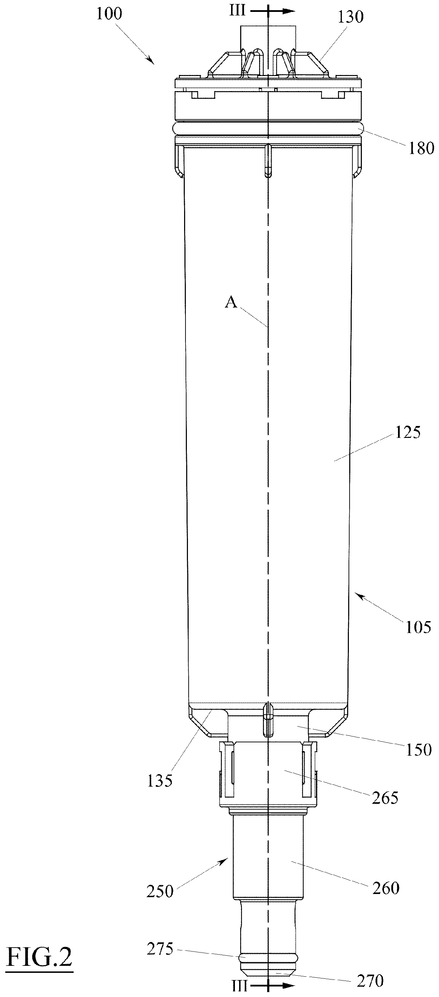

Figure 2 is a side view of an activated carbon filter cartridge according to the present invention and usable in the filtration system of Figure 1.

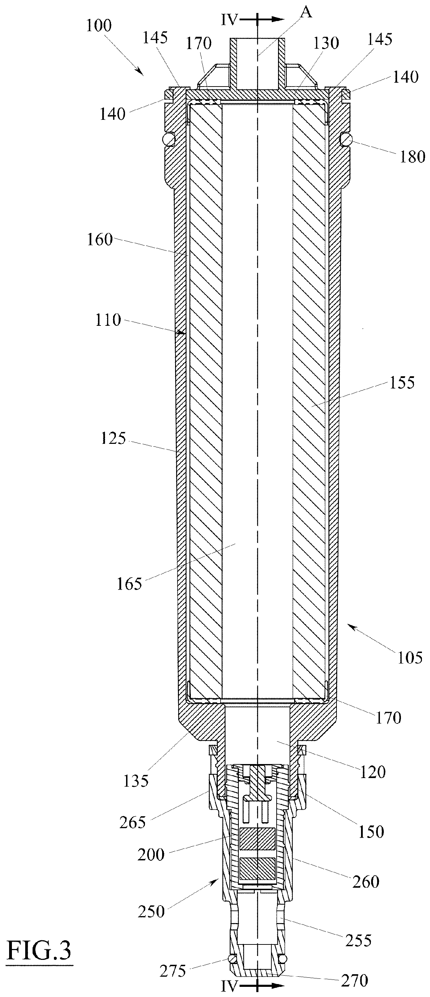

Figure 3 is section III-III of Figure 2.
Figure 4 is section IV-IV of Figure 3.
Figure 5 is an exploded perspective view of the filter cartridge of Figure 2.
Figures 6 and 7 show, in perspective elevation, a detail of the filter cartridge of Figure 2.
Figure 8 is an enlarged detail of Figure 3.
Figure 9 is an enlarged detail of the filter cartridge of Figure 2, shown with the hollow tube associated with the first coupling means.
Figure 10 is section X-X of Figure 9.

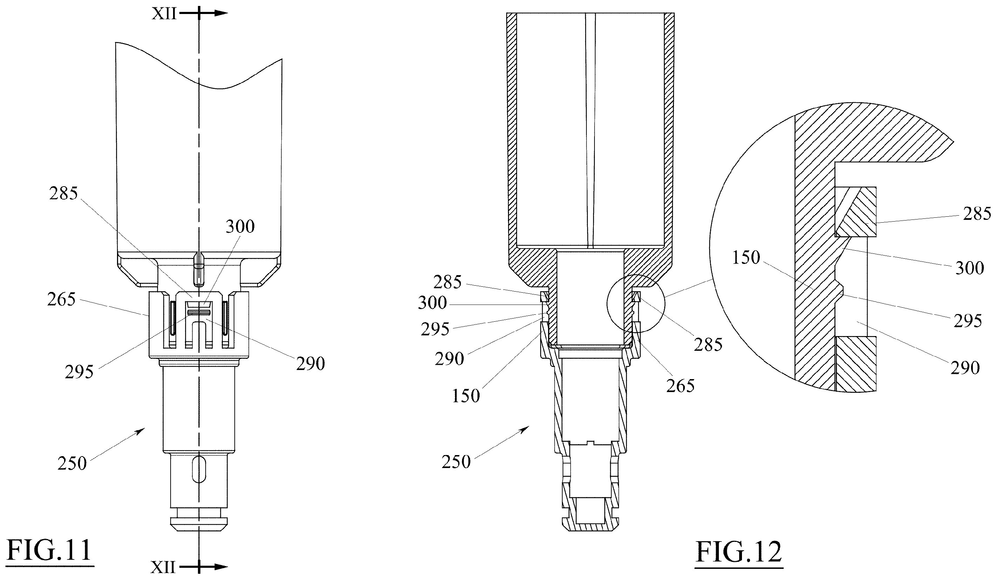

Figure 11 is the detail of Figure 9, shown with the hollow tube associated with the second coupling means.
Figure 12 is section XII-XII of Figure 11.
Figure 13 is a section of the filtration system of Figure 1 made relative to plane XIII-XIII.

### Detailed description

The above-mentioned figures show an activated carbon filter cartridge 100, which may be used as a replaceable consumable component in a filtration system 500, for example in a reverse osmosis filtration system for water for human use and/or technical use. The filtration system 500 may comprise at least a first vessel 505 adapted to house the filter cartridge 100, which is provided with at least one inlet port 510 for the liquid to be filtered (e.g. water) and at least one first outlet port 515 for the filtered liquid.

In a preferred embodiment, the first vessel 505 is a vessel originally intended to house an osmotic membrane filter cartridge.

In addition to the inlet port 510 and the first outlet port 515, the first vessel 505 may therefore also comprise a second outlet port 520, which (in the original use with an osmotic membrane filter cartridge) would be intended to allow the filtered liquid (permeate) to flow out, while the first outlet port 515 would be intended to allow the reject liquid (concentrate) to flow out.

Irrespective of this, the first vessel 505 may be substantially shaped as a vase comprising a side wall 525, having a tubular shape, for example cylindrical, extending along a predetermined longitudinal axis Y, and a bottom part 530, for example convex, which is adapted to close a first axial end of the side wall 525 and may be made in a single piece therewith.

The second and opposite axial end of the first vessel 505 may be closed by a removable lid 535, which is made in a separate body and may be fixed to the side wall 525 by means of a connection which can be separated, for example by screwing.

Preferably, the inlet port 510 and the first outlet port 515 are made in the side wall 525. In particular, the inlet port 510 and the first outlet port 515 may have mutually coplanar axes and/or both perpendicular to the longitudinal axis Y.

The distance between the inlet port 510 and the bottom part 530, along the direction of the longitudinal axis Y, may be greater than the distance between the bottom part 530 and the first outlet port 515.

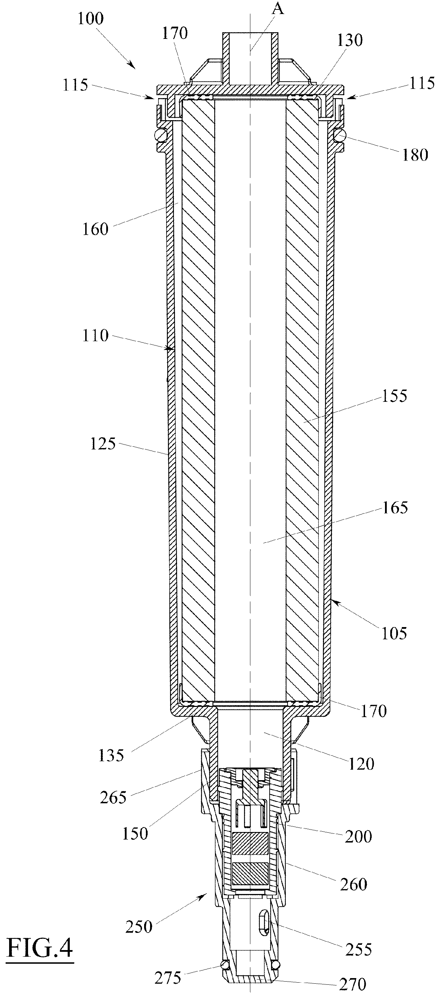

Along the direction of the longitudinal axis Y, both the inlet port 510 and the first outlet port 515 may, however, be closer to the removable lid 535 than to the bottom part 530. The possible second outlet port 520 may be made in the bottom part 530, for example with the axis parallel to or coincident with the longitudinal axis Y of the side wall 525. Returning to the filter cartridge 100 (see Fig. 4), it comprises a casing 105, which defines/delimits an inner cavity 110 and is provided with at least one inlet 115 and at least one outlet 120 for a liquid to be filtered, for example water, communicating with said inner cavity 110.

In particular, the inner cavity 110 may be laterally delimited by a tubular wall 125 of the casing 105, which extends along a predetermined longitudinal axis A and is preferably made of plastic material, for example by injection moulding.

The tubular wall 125 may have a cylindrical or conical shape, in this case slightly conical. Correspondingly, the inner cavity 110 may then take the shape of a solid of revolution relative to said longitudinal axis A, for example a cylindrical or (at least slightly) conical shape.

The casing 105 may further comprise a first closing element 130 adapted to close a first axial end of the tubular wall 125, for example the one with the largest diameter, and a second closing element 135 adapted to close a second axial end of the tubular wall 125, for example the one with the smallest diameter.

Both the first and second closing elements 130 and 135 may preferably be made of plastic, for example by injection moulding.

In particular, the second closing element 135 may be made in a single body with the tubular wall 125, defining therewith a glass- or vase- shaped container.

Otherwise, the first closing element 130 may be made in a body separated from the tubular wall 125 and may be fixed thereto like a lid.

Preferably, fixing the first closing element 130 to the tubular wall 125 is obtained by means of non-removable joining means, i.e., which cannot be disassembled and reassembled, because their separation requires damaging the components.

Thus, once assembled, the casing 105 cannot be reopened in normal use, giving the filter cartridge 100 the characteristics of a disposable (or single-use) device.

At the same time, it is however preferable that the separation of the joining means, for example damage to the relative components, does not require particularly high efforts and/or the use of particularly complex tools or instruments.

Thus, the filter cartridge 100 (e.g. when exhausted) may be easily opened, for example to allow the removal of the inner components and their possible separate disposal.

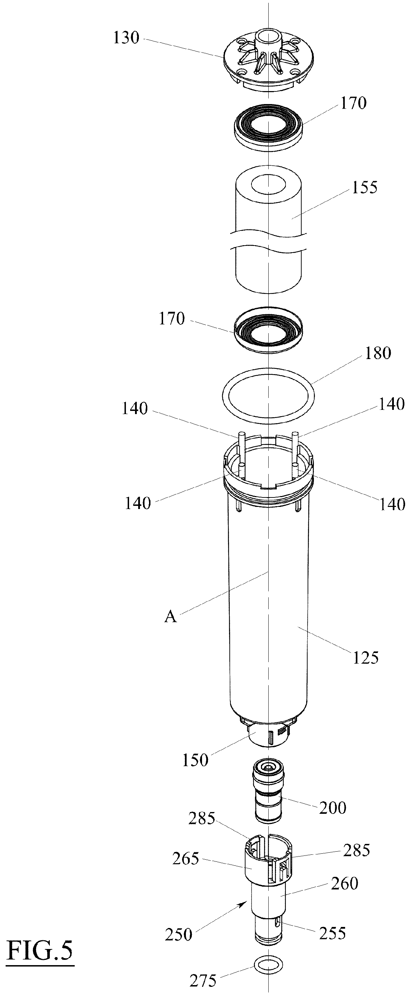

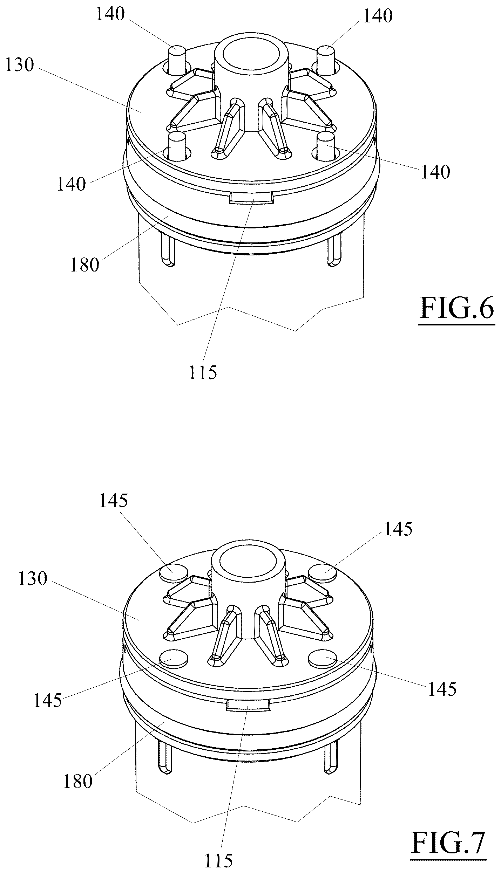

For example (see Figures 5-7), one embodiment provides that the first closing element 130 may be fixed to the tubular wall 125 by means of a plurality of pins 140, in the example four pins 140, individually projecting cantilevered from the first end of the tubular wall 125 and extending parallel to the longitudinal axis A thereof.

In particular, these pins 140, which may be formed as a single body with the side wall 125, may be distributed around the perimeter thereof so as to be angularly equidistant from each other relative to the longitudinal axis A.

During the step of assembling the first closing element 130, each pin 140 may be adapted to be inserted into a corresponding through-hole formed in the first closing element 130, so that its free end projects on the opposite side.

Subsequently, the free end of each pin 140 may be plastically deformed, for example by cold or hot riveting, so as to obtain an enlarged head 145 that prevents the first closing element 130 from possibly slipping out.

In order to remove the first closing element 130, however, it will be possible to rotate it around the longitudinal axis A with enough force to tear the pins 140 away. Alternatively, it is possible to tear the pins 140 away, and then remove the first closing element 130, by applying a bending force or any other appropriate force to the latter, possibly by levering between the first closing element 130 and the tubular wall 125. Irrespective of these considerations, the inlet 115 of the casing 105 may be at least partially defined by a cavity, preferably a thin one, which is defined between the first axial end of the tubular wall 125 and the first closing element 130.

For example (see Fig. 4), the first closing element 130 and/or the tubular wall 125 may be shaped in such a way that the first closing element 130, after having been assembled, is not in direct contact with the axial end of the tubular wall 125, or at least not over the entire perimeter of the latter, thus leaving open one or more gaps (or slots) allowing the passage of liquid from the outside to the inside of the cavity 110.

The outlet 120 of the casing 105 may instead be at least partially formed in the second closing element 135, for example delimited by a cylindrical tang 150 having an axis parallel to or coincident with the longitudinal axis A of the tubular wall 125 and having a smaller diameter compared to the latter.

The filter cartridge 100 further comprises a partition septum 155 formed of activated carbon, which is inserted into the inner cavity 110 of the casing 105, dividing it into a first compartment 160 communicating with the inlet 115 (each inlet), and a second compartment 165 communicating with the outlet 120 (each outlet).

Thus, in order to reach the outlet 120, all the liquid entering the casing 105 through the inlet 115 is forced to pass through the partition septum 155 of activated carbon.

In general, the activated carbon of the partition septum 155 may be a material containing mainly amorphous carbon that is treated, for example by chemical and/or thermal processes, so as to acquire a highly porous structure and a high specific area (i.e. high surface area per unit volume).

For example, the activated carbon of the partition septum 155 may comprise and/or be obtained from fossil coal, wood, coconut, peat or other organic materials.

Thanks to its high porosity, in addition to retaining the corpuscular impurities conveyed by the liquid passing through it, the activated carbon of the partition septum 155 exhibits a high adsorptive power in relation to many contaminants, whose molecules attach themselves to the surface of the activated carbon through physical or chemical interactions (Van der Waals forces or weak chemical bonds).

In particular, the main types of contaminants that can be removed are volatile organic compounds (VOCs), chlorine and its derivatives, chemicals (such as pesticides), odours and unwanted gases.

In general, activated carbon may be in the form of granules, powder or solid blocks. Preferably, the partition septum 155 comprises or consists of a solid block of activated carbon, provided with and adapted to keep its own shape, which may for example be obtained by compaction and/or aggregation of activated carbon powder.

However, it is not excluded that, in other embodiments, the partition septum 155 may be formed from granules or incoherent powder of activated carbon enclosed in a container that is permeable to the liquid to be treated and thus also adapted to determine the shape of the septum.

In any case, the partition septum 155 of activated carbon may have an internally hollow tubular shape, for example cylindrical, that extends along a predetermined longitudinal axis.

The partition septum 155 may then be inserted into the inner cavity 110 of the casing 105, so that its longitudinal axis is parallel to or coincident with the longitudinal axis A.

The first compartment 160 of the filter cartridge 100 may be at least partially formed by the volume between the outer side surface of the partition septum 155 and the inner surface of the casing 105, for example of the tubular wall 125, while the second compartment 165 may be at least partially formed by the volume delimited by the inner surface of the partition septum 155.

The liquid is thus forced to pass through the partition septum 155 flowing from the outside to the inside.

However, it is not excluded that, in other embodiments, for example by means of a different arrangement of the inlets and outlets, the first and second compartments 160 and 165 may be inverted and that the partition septum 155 is adapted to be passed through from the inside to the outside.

The partition septum 155 may be axially clamped between the first closing element 130 and the second closing element 135, possibly with the interposition of two support plates 170.

Each of these support plates 170 may be fixed to a respective axial end of the partition septum 155 and may possibly carry (or make available) at least one gasket adapted to improve the hermetic separation between the first compartment 160 and the second compartment 165.

The filter cartridge 100 further comprises a first O-Ring 180, which is applied externally and around the casing 105, for example housed in a corresponding annular groove formed in the outer surface of the casing 105.

The first O-Ring 180 may be positioned so that its lying plane is interposed between the inlet 115 (each inlet) and the outlet 120 (each outlet), i.e. so that the inlet 115 (each inlet) and the outlet 120 (each outlet) are positioned on opposite sides relative to the plane in which the first O-Ring 180 lies.

In the embodiment illustrated, the first O-Ring 180 is, for example, applied externally and coaxially around the tubular wall 125 and lies in a plane orthogonal to the longitudinal axis A.

In addition, the first O-Ring 180 may be placed, along the direction of the longitudinal axis A, in a position proximal to the first end of the tubular wall 125, i.e. closer to the first axial end than to the second axial end.

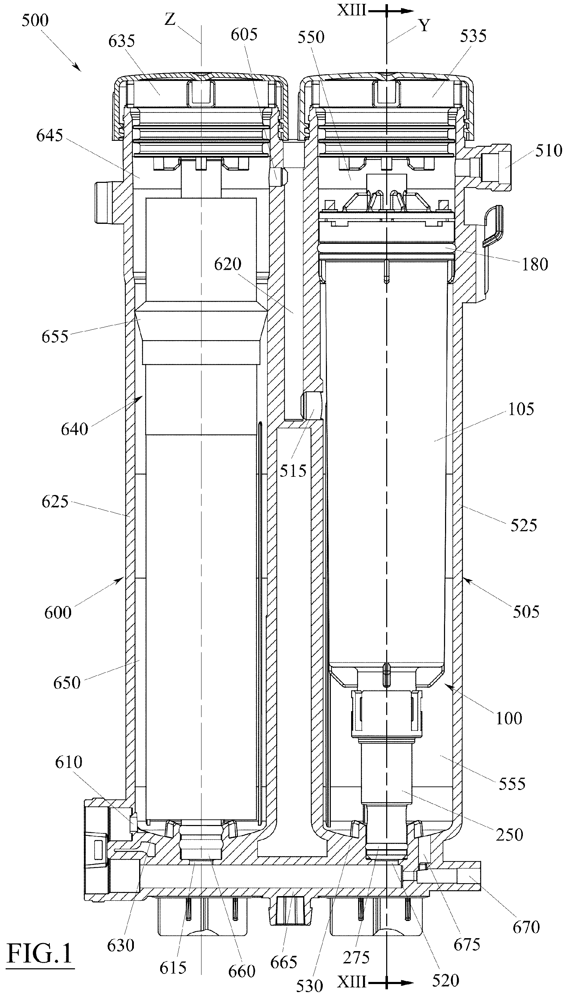

As illustrated in Figure 1, the filter cartridge 100 is adapted to be housed in the first vessel 505, so that the first O-Ring 180 divides the inner volume of the first vessel 505 into two separate chambers, of which a first chamber 550, communicating with the inlet port 510 and with the inlet 115 (each inlet) of the filter cartridge 100, and a second chamber 555, communicating with the outlet 120 (each outlet) of the filter cartridge 100 and with the first outlet port 515.

For example, the filter cartridge 100 may be inserted into the first vessel 505 oriented with the longitudinal axis A parallel to or coincident with the longitudinal axis Y of the side wall 525 of the first vessel 505, so that the first O-Ring 180 is radially interposed and compressed between the tubular wall 125 and the side wall 525.

Along the direction of the longitudinal axis Y, the first O-Ring 180 may also be positioned between the inlet port 510 and the first outlet port 515, hermetically separating them and thus forcing the liquid to pass through the filter cartridge 100.

The filter cartridge 100 may further comprise a shutter body, which is adapted to obstruct the second outlet port 520 of the first vessel 505 in which the filter cartridge 100 is housed. In the illustrated example, this shutter body may be comprised (e.g., constituted and/or defined and/or integrated and/or made available) by a hollow tube 250, which is in communication with the outlet 120 of the casing 105 and is provided with one or more outflow openings 255 for the outflowing liquid.

In particular, the hollow tube 250 may comprise a tubular-shaped side wall 260 that extends along a predetermined longitudinal axis, preferably parallel to or coincident with the longitudinal axis A.

A first axial end of this side wall 260 may be in communication with the outlet 120 of the casing 105.

For example, said first axial end may be defined by an engagement section 265 of the side wall 260, generally having a cylindrical shape, which coaxially and substantially fits to measure onto the cylindrical tang 150 defining the outlet 120.

The second opposite axial end of the side wall 260 can instead be closed by a bottom wall 270.

Near the bottom wall 270, the side wall 260 may be externally surrounded by a second O-Ring 275, which may be housed in a corresponding annular groove formed in the side wall 260 itself and which, regardless of the latter, may lie in a plane orthogonal to the longitudinal axis.

The outflow openings 255 may be made in the side wall 260, for example in the section between the lying plane of the second O-Ring 275 and the first axial end.

When the filter cartridge 100 is inserted into the first vessel 505, the second end of the hollow tube 250, the one closed by the bottom wall 270 and surrounded by the O-Ring 275, can be adapted to obstruct, preferably sealing, the second outlet port of the first vessel 505, for example by inserting itself into it, while the outflow openings 255 remain in direct communication with the first outlet port 515.

Thus, the liquid entering the first vessel 505, after passing through the filter cartridge 100 and being filtered, can then only flow out of the first outlet port 515.

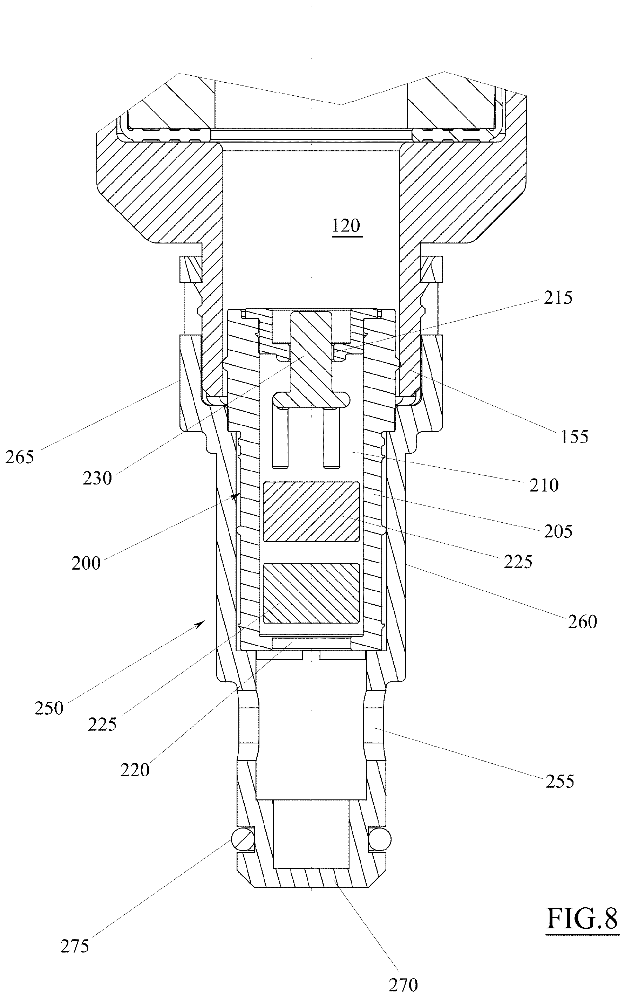

As most clearly visible in Figure 8, the filter cartridge 100 may further comprise a sanitising capsule 200.

This sanitising capsule 200 comprises a shell 205, provided with at least one inlet opening 215 and at least one outlet opening 220, which defines, therein, a mixing chamber 210 communicating with said inlet openings 215 and outlet openings 220.

For example, the shell 205 may have a substantially tubular shape, the inner cavity of which defines the mixing chamber 210 and at the opposite axial ends of which the inlet opening 215 and the outlet opening 220 are respectively located.

The inlet opening 215 is placed in communication with the outlet 120 of the casing 105, so that the mixing chamber 210 is adapted to be passed through by the liquid exiting the filter cartridge 100.

The sanitising capsule 200 further comprises one or more solid tablets 225 of a sanitising substance, for example of a biocide substance, which are contained within the mixing chamber 210, so as to be hit by the passing liquid.

The sanitising capsule 200 may further comprise a shutter body 230 adapted to partially obstruct the inlet opening 215 in order to adjust the flow rate of liquid passing through the mixing chamber 210.

This shutter body 230 may be kept in the obstruction position by the solid tablets 225 so that, following dissolution thereof, the shutter body 230 can move (pushed by the liquid) towards a position wherein it no longer obstructs the inlet opening 215, maximising the flow rate of liquid passing through the shell 205.

The sanitising capsule 200 may be at least partially housed in the hollow tube 250, so that the inlet opening 215 of the shell 205 is in communication with the outlet 120 of the casing 105 and the outlet opening 220 is in communication with the outflow opening 255 (each outflow opening) of the hollow tube 250.

The sanitising capsule 200 may be further partially housed in the cylindrical tang 150 defining the outlet 120 of the casing 105.

For example, the tubular shell 205 of the sanitising capsule 200 may be coaxially inserted, substantially to measure and possibly with the interposition of gaskets, into at least part of the hollow tube 250 and part of the cylindrical tang 150.

In order to allow the assembly of the sanitising capsule 200 (when provided), the hollow tube 250 is preferably made in a body separated from the casing 105, for example relative to the second closing element 135, and is joined thereto, for example to the cylindrical tang 150 defining the outlet 120, by means of suitable fasteners.

These fasteners are preferably of the detachable type, i.e. the type that allows the separation of the hollow tube 250 relative to the casing 105, with no need to damage the components.

For example, the fasteners may be coupling means adapted to counteract the movement of the hollow tube 250 and the casing 105 away from each other, in this case of the hollow tube 250 and the cylindrical tang 150, along the direction of the longitudinal axis.

More particularly, the fasteners may comprise first and second coupling means.

The first coupling means are adapted to counteract the movement of the hollow tube 250 and the casing 105 away from each other, beyond a predetermined first constraining position.

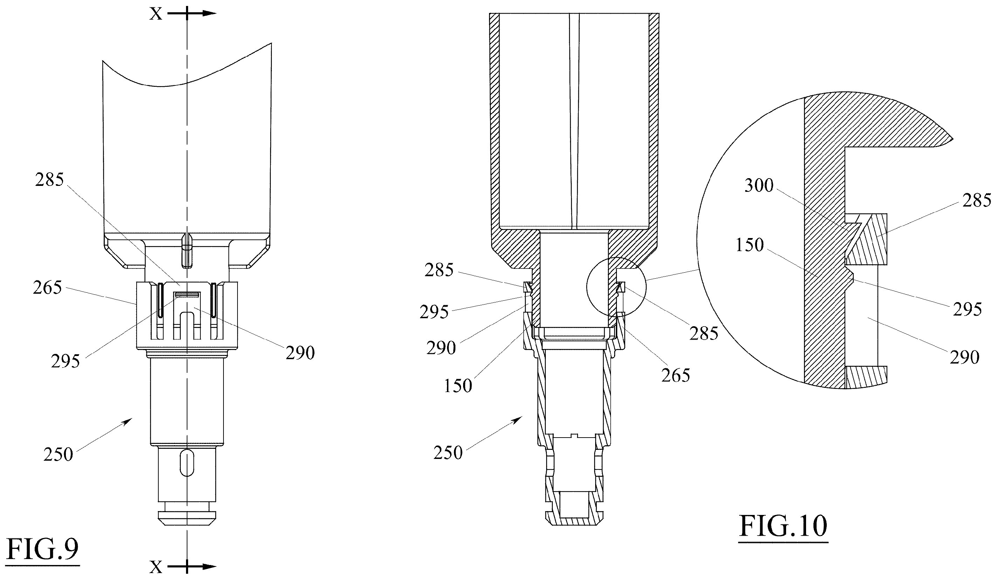

As best illustrated in Figures 9 and 10, these first coupling means may comprise a pair of flexible fins 285, which may be formed as diametrically opposite portions of the engagement section 265, and each of which may have a through-slot 290 giving it a bridge-like shape.

The first coupling means may therefore comprise a first pair of teeth 295 formed, in diametrically opposite positions, in the outer surface of the cylindrical tang 150 defining the outlet 120.

Thus, as a result of the axial insertion of the engagement section 265 on the cylindrical tang 150, the teeth 295 come into contact with the free edges of the flexible fins 285 and, by virtue of the bevelled shape of said free edges and/or the profile of the teeth 295, the latter are adapted to cause the flexible fins 285 to bend radially outwards.

Continuing the axial insertion, the flexible fins 285 overlie the teeth 295 and, elastically recovering their initial shape, engage the teeth 295 within the respective through-slots 290 (as visible in the figures).

This engagement results in that the teeth 295 counteract the hollow tube 250 from possibly slipping out in the opposite direction, thus defining the first constraining position mentioned above.

The second coupling means are also adapted to counteract the movement of the hollow tube 250 and the casing 105 away from each other, but beyond a predetermined second constraining position in which the hollow tube 250 and the casing 105 are closer together than in the first constraining position, for example where the cylindrical tang 150 is inserted more deeply into the engagement section 265 of the hollow tube 250.

These second coupling means may comprise the same flexible fins 285 described above and a second pair of teeth 300 formed, in diametrically opposite positions, also in the outer surface of the cylindrical tang 150 defining the outlet 120, but at a greater distance from the free edge of the tang than the first teeth 295.

Thus, following a further axial insertion of the engagement section 265 on the cylindrical tang 150, the teeth 300 come into contact with the free edges of the flexible fins 285 and, by virtue of the bevelled shape of the free edges and/or the profile of the teeth 300, the latter are adapted to cause the flexible fins 285 to bend radially outwards.

Continuing the axial insertion, the flexible fins 285 overlie the teeth 300 and, elastically recovering their initial shape, also engage the teeth 300 within their respective through-slots 290.

This engagement results in that the teeth 300 counteract the hollow tube 250 from possibly slipping out in the opposite direction, thus defining the second constraining position mentioned above.

Preferably, the second constraining means are configured to offer a contrast to the hollow tube 250 that is greater than that offered by the first constraining means.

In other words, although both coupling means are preferably of the detachable type, the axial force required to overcome the contrast offered by the second coupling means, for example to release backwards the flexible fins 285 from the teeth 300, is greater than the axial force required to overcome the contrast offered by the first coupling means, for example to release backwards the flexible fins 285 from the first teeth 295.

This effect may be obtained, for example, thanks to a different shape of the teeth 295, which may have for example a convex profile, compared to the teeth 300, which may have a more angular profile, for example as a triangular sawtooth, and/or which may project more than the outer surface of the cylindrical tang 150.

The presence of first and second coupling means may be advantageous during assembly, as the hollow tube 250 may be initially coupled to the casing 105 by means of the first coupling means, resulting in a loose coupling.

If the filter cartridge 100 provides the installation also of the sanitising capsule 200, the hollow tube 250 may therefore be easily separated to allow the insertion of the sanitising capsule 200.

Conversely, or possibly after the insertion of the sanitising capsule 200, the hollow tube 250 may be coupled to the casing 105 in a more stable and secure manner by means of the second coupling means.

In particular, the constraint generated by the second coupling means may be calibrated, for example thanks to a suitable shape of the teeth 300, to ensure that, during a possible extraction of the filter cartridge 100 from the first vessel 505, the hollow tube 250 is firmly kept joined to the casing 105 and is therefore removed at the same time.

In this regard, it should also be noted that the length of the filter cartridge 100 can be selected such that the first vessel 505 can house it only when the hollow tube 250 is coupled to the cylindrical tang 150 in the second constraining position, so as to ensure that the filter cartridge 100 may be used only when it is stably assembled.

Returning to Figure 1, the filtration system 500 may further comprise at least a second vessel 600, which is provided with at least one inlet port 605, a first outlet port 610 and a second outlet port 615 for the liquid.

The inlet port 605 of the second vessel 600 is in communication with the first outlet port 515 of the first vessel 505, for example by means of a transfer duct 620, so that the first and second vessels 505 and 600 are connected in series relative to the liquid flowing through them.

This second vessel 600 may also be substantially shaped as a vase comprising a side wall 625 having a tubular shape, e.g. cylindrical, extending along a predetermined longitudinal axis Z, and a bottom part 630, for example having a convex shape, which is adapted to close a first axial end of the side wall 625 and may be formed in a single body with it.

The second and opposite axial end of the second vessel 600 may be closed by a removable lid 635, which is made in a separate body and may be fixed to the side wall 625 by means of a connection which can be separated, for example by screwing.

Preferably, the inlet port 605 and the first outlet port 610 are made in the side wall 625. In particular, the inlet port 605 and the first outlet port 610 may have mutually coplanar axes and/or both be perpendicular to the longitudinal axis Z.

The distance between the inlet port 605 and the bottom part 630, along the direction of the longitudinal axis Z, may be greater than the distance between the bottom part 630 and the first outlet port 610.

In particular, while the inlet port 605 may be located near the removable lid 635, the first outlet port 610 may be located near the bottom part 630.

The second outlet port 615 may be made in the bottom part 630, for example with an axis parallel to or coincident with the longitudinal axis Z of the side wall 625.

As clearly visible in Figure 1, the first and the second vessels 505 and 600 are preferably arranged so that their respective side walls 525 and 625 are arranged side by side to each other and have respective mutually parallel longitudinal axes Y and Z.

Preferably, the side walls 525 and 625 of the first and second vessels 505 and 600 are not in mutual contact but are separated by a small gap, in which the transfer duct 620 may be housed.

Furthermore, the side walls 525 and 625 of the first and of the second vessels 505 and 600 preferably have the same length, i.e. the same longitudinal extension, and bring the respective bottom parts 530 and 630 substantially to the same axial height relative to the longitudinal axes Y and Z.

In particular, the first and the second vessels 505 and 600 are intended to be installed in such a way that the longitudinal axes Y and Z of the corresponding side walls 525 and 625 are oriented vertically and that the bottom parts 530 and 630 are positioned at the bottom, each of them for closing the lower axial end of the corresponding side wall 525 and 625.

Inside the second vessel 600, an osmotic membrane filter cartridge 640 can be accommodated, which is generally adapted to divide the inner volume of the second container 600 into three separate chambers, of which a first chamber 645 communicating with the inlet port 605, a second chamber 650 communicating with the first outlet port 610, and a third chamber (non visible) communicating with the second outlet port 615.

The osmotic membrane filter cartridge 640 is itself well-known and generally has a tubular shape, the inner cavity of which defines the aforementioned third chamber.

In particular, the osmotic membrane filter cartridge 640 may comprise a perforated-wall central support tube, around which an osmotic membrane is spirally wound, the windings of which are at least slightly spaced from each other, defining thin gaps.

To create these gaps, the windings of the osmotic membrane may be alternated with a sort of mesh, called a spacer or tricot.

The osmotic membrane filter cartridge 640 may further comprise an O-Ring 655, which may be coaxially associated externally to the osmotic membrane windings.

The osmotic membrane filter cartridge 640 is coaxially inserted into the second vessel 600, so that a terminal section 660 of the central support tube is inserted, with the interposition of a sealing gasket, into the second outlet port 615.

Thus, the second outlet port 615 is in communication with the inner volume of the osmotic membrane filter cartridge 640, which defines the aforementioned third chamber.

The O-Ring 655, on the other hand, is adapted to create a sealing between the outer surface of the osmotic membrane windings and the inner surface of the side wall 625 of the second vessel 600, preferably in a segment axially comprised between the inlet port 605 and the first outlet port 610, dividing the first chamber 645 from the second chamber 650.

Thus, the liquid coming from the inlet port 605 may flow through the gaps between the osmotic membrane windings until the first outlet port 610 is reached.

However, by virtue of the fact that there is a pressure level higher than the osmotic pressure in the second vessel 600, some of the transiting water is able to pass through the osmotic membrane layers, and then flow through the inner cavity of the central support tube towards the second outlet port 615.

Thanks to the reverse osmosis phenomenon, starting from water at the inlet having a certain concentration of salts, the filtered water that outflows from the second outlet port 615 will have a significantly lower concentration of salts than the reject water that reaches the second outlet port 610.

The side wall 625 and bottom part 630 of the second vessel 600 may be made in one single-piece body with the side wall 525 and bottom part 530 of the first vessel 505. This single-piece body may also comprise (define) the transfer duct 620 and a collection manifold 665, which is in communication with both the second outlet ports 520 and 615 of the first and second vessels 505 and 600.

The collection manifold 665 may be directly joined to the bottom parts 530 and 630, for example on the opposite side relative to the side walls 525 and 625 of the first and of the second vessels 505 and 600.

The collection manifold 665 may be shaped as a duct, for example a straight duct, the longitudinal axis C of which is oriented perpendicularly to the longitudinal axes Y and Z of the side walls 525 and 625 of the first and of the second vessel 505 and 600, however lying preferably in the same plane on which said longitudinal axes Y and Z lie.

The collection manifold 665 may be provided with an outlet duct 670, through which the filtered water may be conveyed to the users.

The collection manifold 665 may also be in direct communication with the second chamber 555 of the first vessel 505, for example through a by-pass passage 675 that can be formed in the bottom part 530.

Thus, part of the water present in the second chamber 555 of the first vessel 505 may be mixed with the filtered water present in the collection manifold 665, in order to adjust the effective salinity of the water being supplied to users.

This expedient can be particularly useful when water is used in the preparation of beverages, for example to feed automatic coffee machines or the like, in order to ensure a correct sapidity of the beverage.

In order to adjust this mixing, the collection manifold 426 may be provided with a valve (not shown) adapted to close and/or adjust the opening degree of the by-pass passage 675.

The opposite axial end of the collection manifold 665 may instead be simply closed by means of a plug.

We would like to reiterate that the above-described first and second vessels 505 and 600 may both be originally intended to house an osmotic membrane filter cartridge in order to perform a reverse osmosis filtration in two steps connected in series; and that the activated carbon filter cartridge 100 may advantageously replace the osmotic membrane cartridge provided in the first vessel 505, in order to integrate a pre-filtration step with activated carbon into the filtration system 500 (possibly pre-existing).

Thereby, an external pre-filter is made unnecessary and a complete filtration system 500 with a very small dimension is obtained.

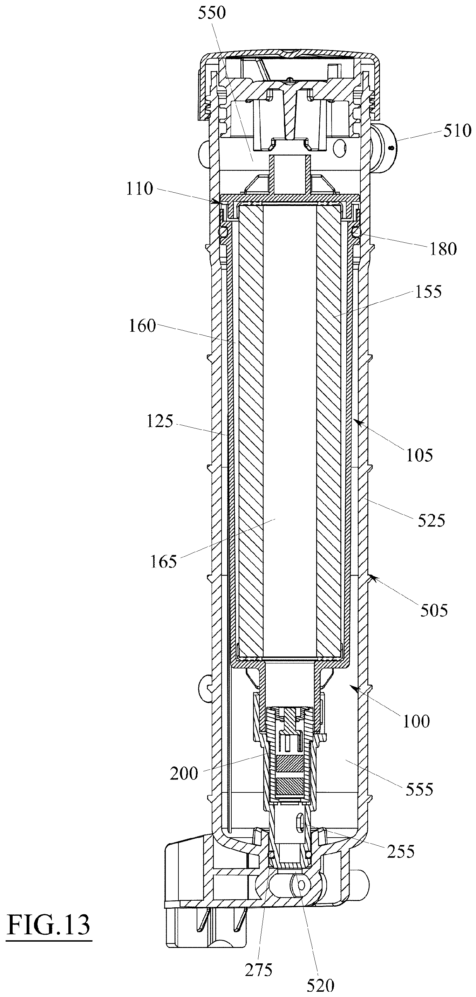

As can be easily understood, the operation of the filtration system 500 described above is in fact as follows (see also Fig. 13).

The liquid to be filtered (water) is fed (e.g., pumped) into the inlet port 510 of the first vessel 505 so that, in order to flow from the first chamber 550 to the second chamber 555, it is forced through the filter cartridge 100 and, in particular, the activated carbon partition septum 155.

Thus, the partition septum 155 is able to retain corpuscular impurities and certain chemical substances, such as chlorine, possibly present in the liquid.

Before reaching the second chamber, the liquid that has passed through the partition septum 155 travels through the hollow tube 250 and, if present, the sanitising cartridge 200 at least partially contained therein.

During a first operation step (after the installation of the filter cartridge 100), the liquid passing through the sanitising capsule 200 comes into contact with the solid tablets 225 of sanitising substance contained in the mixing chamber 210 and, mixing with the sanitising substance that is progressively released from these solid tablets 225, puts it into circulation, performing a sanitisation process of the entire downstream filtration system 500. In this first step, since the inlet opening 215 is partially obstructed by the shutter body 230, the flow rate of liquid passing through the mixing chamber 210 is limited, in order to increase the contact time between the liquid and the solid tablets 225 and thus obtain an optimal concentration of sanitising substance in the liquid itself.

A low water flow rate at this initial step also has the advantage of increasing the dissolution time and consequently of increasing the contact time between the solution and the parts of the filtration system 500 to be sanitised.

When the solid tablets 225 of sanitising substance have completely dissolved, and consequently, after a period of flushing, the concentration of sanitising substance is essentially negligible, the sanitisation process is complete and the filtration system 500 may perform its normal filtration function.

In this second step, the inlet opening 215 is completely open, so that the flow rate of water passing through the mixing chamber 210 is globally higher than the one which passed through it during the sanitisation step and can be sized so that this water flow is adequate for the demands of the users.

The variation of the water flow between the first and second operation step also has the advantage of allowing operators to realise that sanitisation is complete and that, from that moment on, the liquid (e.g. water) coming from the filtration system 500 can be used.

In any case, during all the operation steps, the filtered liquid which is collected in the second chamber 555 of the first vessel 505 cannot flow into the second outlet port 520, since the latter is occluded by the shutter body (e.g. by the hollow tube 250), and is therefore forced to flow towards the first outlet port 515 and, through the transfer duct 620 towards the inlet port 605 of the second vessel 600.

At this point, the liquid is subjected to a further filtration (or micro-filtration) step by the osmotic membrane filter cartridge 640, such that the water (permeate) passing through the membrane flows through the second outlet port 615 into the collection manifold 665, while the reject water (concentrate) flows out of the first outlet port 610 to be discharged. Obviously, a person skilled in the art can make numerous modifications of a technical application nature to everything described, without thereby departing from the scope of the invention as claimed below.

## Claims

1. An activated carbon filter cartridge (100), comprising:
- a casing (105) provided with at least one inlet (115) and at least one outlet (120) for a liquid, and
- a partition septum (155) formed of activated carbon, which is inserted into an inner cavity (110) of the casing (105), dividing it into a first compartment (160), communicating with the inlet (115), and a second compartment (165), communicating with the outlet (120),
wherein said casing (105) is adapted to be housed inside a vessel (505), in order to divide its inner volume into two separate chambers, of which a first chamber (550), communicating with an inlet port (510) of the vessel (505) and with the inlet (115) of the casing (105), and a second chamber (555), communicating with the outlet (120) of the casing and with an outlet port (515) of the vessel (505).

2. A filter cartridge (100) according to claim 1, wherein the partition septum (155) comprises or consists of a solid block of activated carbon.

3. A filter cartridge (100) according to claim 1 or 2, wherein the partition septum (155) has a tubular shape.

4. A filter cartridge (100) according to claim 3, wherein the inner cavity (110) of the casing (105) has a cylindrical or conical shape and the partition septum (155) is arranged therein so that the longitudinal axes (A) of the inner cavity (110) and of the partition septum (155) are mutually parallel or coincident.

5. A filter cartridge (100) according to claim 4, wherein the first compartment (160) is at least partially formed by a volume between the outer side surface of the partition septum (155) and an inner surface of the casing (105), while the second compartment (165) is at least partially formed by a volume delimited by the inner surface of the partition septum (155).

6. A filter cartridge (100) according to any one of the preceding claims, comprising an O-Ring (180) which is applied externally around the casing (105) and lies in a plane, relative to which the inlet (115) and the outlet (120) are positioned on opposite sides, said O-Ring being adapted to remain interposed between the casing (105) and the vessel (505) for housing the filter cartridge (100).

7. A filter cartridge (100) according to any one of the preceding claims, wherein the casing (105) has a tubular wall (125) adapted to laterally delimit the inner cavity (110), a first closing element (130) adapted to close a first end of the tubular wall (125) and a second closing element (135) adapted to close a second end of the tubular wall (125).

8. A filter cartridge (100) according to claims 6 and 7, wherein the O-Ring (180) is applied externally and coaxially around the tubular wall (125) of the casing (105), lying in a plane orthogonal to a longitudinal axis (A) of the tubular wall (125) itself.

9. A filter cartridge (100) according to claim 8, wherein the O-Ring (180) is placed along the direction of the longitudinal axis (A) of the tubular wall (125), in a position proximal to the first end of the tubular wall (125).

10. A filter cartridge (100) according to any one of claims 7 to 9, wherein the inlet (115) is at least partially defined by a gap defined between the first end of the tubular wall (125) and the first closing element (130).

11. A filter cartridge (100) according to any one of claims 7 to 10, wherein the outlet (120) is at least partially formed in the second closing element (135).

12. A filter cartridge (100) according to claim 11, wherein the outlet (120) is defined by a cylindrical tang (150) having an axis parallel to or coincident with a longitudinal axis (A) of the tubular wall (125).

13. A filter cartridge (100) according to any one of claims 7 to 12, wherein the first closing element (130) is fixed to the tubular wall (125) by means of a plurality of pins (140) individually projecting from the first end of the tubular wall (125) and extending parallel to the longitudinal axis (A) of the latter, each of which is threaded through a corresponding through-hole of the first closing element (130) and carries, on the opposite side relative to the side wall, an enlarged head (145) for axial retention, which is made in a single piece with the corresponding pin (140).

14. A filter cartridge (100) according to any one of the preceding claims, comprising a shutter body adapted to obstruct an outlet port (520) of the vessel (505).

15. A filter cartridge (100) according to any one of the preceding claims, comprising a sanitising capsule (200) provided with:
- a shell (205) defining therein a mixing chamber (210) and provided with at least one inlet opening (215) in communication with the outlet (120) of the casing (105) and at least one outlet opening (220), and
- at least one solid tablet (225) of sanitising substance, which is contained within the mixing chamber (210).

16. A filter cartridge (100) according to any one of the preceding claims, comprising a hollow tube (250) in communication with the outlet (120) and provided with one or more outflow openings (255) for the liquid.

17. A filter cartridge (100) according to claim 16, wherein said hollow tube (250) comprises a side wall (260) with a tubular shape having a first end in communication with the outlet (120) of the casing (105), and a second and opposite end closed by a bottom wall (270), each outflow opening (255) being made in said side wall (260).

18. A filter cartridge (100) according to claim 14 and any one of claims 16 or 17, wherein said hollow tube (250) comprises said shutter body.

19. A filter cartridge (100) according to claim 15 and any one of claims 16 to 18, wherein said hollow tube (250) contains at least in part the sanitising capsule (200), so that the outlet opening (220) of the shell (205) is in communication with the outflow opening (255) of the hollow tube (250).

20. A filter cartridge (100) according to any one of claims 16 to 19, wherein the hollow tube (250) is fixed to the casing (105) by means of first coupling means adapted to counteract the movement of the hollow tube (250) and the casing (105) away from each other, beyond a predetermined first constraining position, and second coupling means adapted to counteract the movement of the hollow tube (250) and the casing (105) away from each other, beyond a predetermined second constraining position,
wherein the hollow tube (250) and the casing (105) in said second constraining position are closer to each other than in said first constraining position,
and wherein said second constraining means are configured to offer greater contrast than said first constraining means.

21. A filtration system (500) comprising:
- at least one first vessel (505) provided with at least one inlet port (510) and at least one first outlet port (515) for a liquid,
- a filter cartridge (100) according to any one of the preceding claims, which is housed in the first vessel (505) so as to divide the inner volume of the first vessel (505) into a first chamber (550) in communication with the inlet port (510) of the first vessel (505) and with the inlet (115) of the filter cartridge (100), and a second chamber (555), in communication with the outlet of the filter cartridge (100) and with said first outlet port (515) of the first vessel (505).

22. A filtration system (500) according to claim 21, wherein the first vessel (505) is provided with a second outlet port (520) and wherein the filter cartridge (100) comprises a shutter body adapted to obstruct said second outlet port (520) of the first vessel (505).

23. A filtration system (500) according to claim 21 or claim 22, comprising:
- a second vessel (600) provided with at least one inlet port (605), a first outlet port (610) and a second outlet port (615) for a liquid,
- an osmotic membrane filter cartridge (640), which is inserted inside the second vessel (600) to divide its inner volume into three distinct chambers, of which a first chamber (645) communicating with the inlet port (605), a second chamber (650) communicating with the first outlet port (610) and a third chamber communicating with the second outlet port (615),
wherein the inlet port (605) of said second vessel (600) is connected to the first outlet port (515) of the first vessel (505).
